# FASCICULE DE BREVET EUROPEEN

(11) **EP 2 849 902 B1**
(45) Date de publication et mention de la délivrance du brevet: **29.06.2022**
(21) Numéro de dépôt: 13727288.6
(22) Date de dépôt: 14.05.2013
(51) Int. Cl.: B22C 7/02, B22C 9/04

(54) **DISPOSITIF POUR MANIPULER DES GRAPPES EN CIRE**
VORRICHTUNG ZUR HANDHABUNG VON SPNINNENARTIGEN WACHSANGÜSSEN
DEVICE FOR HANDLING WAX SPIDER-LIKE SPRUES

(30) Priorité: 14.05.2012 FR 1254362
(43) Date de publication de la demande: 25.03.2015
(73) Titulaire: Safran Aircraft Engines, 75015 Paris (FR)
(72) Inventeur: MARQUES, François, F-95570 Bouffemont (FR); PIAT, John, F-75010 Paris (FR); TIREL, Monique, F-93200 Saint Denis (FR)
(74) Mandataire: Camus, Olivier Jean-Claude
(86) Numéro de dépôt international: PCT/FR2013/051052
(87) Numéro de publication internationale: WO 2013/171422

(56) Documents cités:
- EP-A1- 2 052 799
- DE-U1- 29 900 156
- ES-A1- 2 338 513
- FR-A1- 2 336 997
- FR-A1- 2 825 037
- JP-A- 3 000 448
- US-A- 2 482 306

## Description

L'invention concerne un dispositif pour manipuler des grappes en cire. Plus particulièrement, de telles grappes en cire sont utilisées dans le domaine aéronautique pour la fabrication de moule adapté à la réalisation d'aubes.

Pour réaliser une grappe en cire, une pluralité de pièces sont moulées par injection, les pièces ainsi obtenues étant ensuite assemblées en grappes autour d'un axe.

Ces grappes en cire sont, par exemple utilisées pour la fabrication d'aubes. Pour ce faire, les grappes en cire sont dans un premier temps lavées dans un bain afin de les nettoyer de toutes impuretés, puis subissent de multiples étapes de trempage afin de constituer une carapace en céramique.

L'ensemble formé par la grappe en cire recouverte d'une carapace en céramique subit ensuite une étape de décirage par autoclave. Cette étape de décirage permet de faire fondre la cire de sorte qu'il ne reste plus que la carapace formant un moule pour la fabrication d'aubes.

Une grappe en cire présente généralement un poids de l'ordre de 3,5 Kilogrammes. Du fait des nombreuses étapes d'assemblages, de la complexité et de la précision de ces dernières, les opérateurs doivent se maintenir debout pour manipuler les grappes. Il s'ensuit que les opérateurs sont soumis à de fortes contraintes posturales bien souvent génératrices de troubles musculo-squelettiques. Le document FR 2 336 997 A1 divulgue un dispositif pour manipuler des grappes en cire destinées à être connectées à un appareil de manipulation.

Dans ce contexte, la présente invention a pour but de fournir un dispositif pour manipuler des grappes en cire permettant aux opérateurs de manipuler des grappes en cire lors de leur assemblage sans pour autant subir de fortes contraintes posturales. En outre, la présente invention vise à fournir un dispositif pour manipuler des grappes en cire peu onéreux.

A cette fin, l'invention propose un dispositif pour manipuler des grappes en cire comportant :
- un premier support formant un premier plan, ledit premier support comportant des moyens de maintien d'une grappe en cire ;
- un deuxième support formant un deuxième plan, ledit premier support et ledit deuxième support formant un premier angle déterminé ;
- des premiers moyens de raccordement entre ledit premier support et ledit deuxième support ;
- un troisième support formant un troisième plan, ledit deuxième support et ledit troisième support formant un deuxième angle déterminé, et
- des deuxièmes moyens de raccordement entre ledit deuxième support et ledit troisième support,
dans lequel chacun des trois supports est configuré pour que le dispositif puisse être mis en appui sur un des trois supports et le moyen de maintien présentent un orifice adapté pour recevoir un axe de la grappe en cire.

. Chacun des supports forme un plan de façon à ce que le dispositif puisse être en appui sur une table ou sur un établi. Les premiers moyens de raccordement autorisent le basculement du dispositif sur le premier support ou le deuxième support. En outre, les deuxièmes moyens de raccordement autorisent le basculement du dispositif sur le deuxième support ou le troisième support. Ainsi, la grappe en cire peut passer d'une position à une autre sans que l'opérateur n'exerce aucun effort excessif puisque le poids de la grappe est supporté par le dispositif. A ce titre, il convient de noter que le troisième support permet en outre de déplacer le centre de gravité de l'ensemble formé par la grappe en cire et le dispositif selon l'invention de sorte que l'ensemble est une position d'équilibre.

Avantageusement, les trois positions de travail facilitent l'assemblage de la grappe en cire et évite à l'assembleur de subir des troubles musculo-squelettiques.

Le dispositif pour manipuler des grappes en cire selon l'invention peut également présenter une ou plusieurs des caractéristiques ci-après, considérées individuellement ou selon toutes les combinaisons techniquement possibles :
Dans une réalisation non limitative, les premiers moyens de raccordement présentent un rayon de courbure autorisant le basculement du dispositif sur le premier support ou le deuxième support.

Dans une réalisation non limitative, les deuxièmes moyens de raccordement présentent un rayon de courbure autorisant le basculement du dispositif sur le deuxième support ou le troisième support.

Dans une réalisation non limitative, le dispositif selon l'invention comporte un système de blocage en translation de la grappe en cire.

Dans une réalisation non limitative, le système de blocage en translation est formé par un épaulement en saillie dans l'orifice adapté pour coopérer avec un épaulement externe que comporte l'axe de la grappe en cire.

Dans une réalisation non limitative, le dispositif selon l'invention comporte un système de blocage en rotation du moyen de maintien de la grappe en cire.

Dans une réalisation non limitative, le système de blocage en rotation est une vis à friction adaptée pour venir en appui sur le moyen de maintien de la grappe en cire.

Dans une réalisation non limitative :
- le premier support présente une structure tubulaire en forme de U,
- le deuxième support est formé par deux tubes,
- le troisième support présente une structure tubulaire en forme de U,
- les premiers moyens de raccordement sont formés par deux coudes tubulaires, chaque coude tubulaire coopérant :
   ▪ à une première extrémité avec l'extrémité d'un tube du premier support, et
   ▪ à une deuxième extrémité avec une première extrémité d'un tube du deuxième support,
- les deuxièmes moyens de raccordement sont formés par deux coudes tubulaires, chaque coude tubulaire coopérant :
   ▪ à une première extrémité avec une deuxième extrémité d'un tube du deuxième support, et
   ▪ à une deuxième extrémité avec l'extrémité d'un tube du troisième support.

Dans une réalisation non limitative, le premier angle déterminé est compris entre 20 et 70 degrés et est préférentiellement de 45 degrés.

Dans une réalisation non limitative, le deuxième angle déterminé est compris entre 20 et 70 degrés et est préférentiellement de 45 degrés.

D'autres caractéristiques et avantages de l'invention ressortiront clairement de la description qui en est donnée ci-dessous, à titre indicatif et nullement limitatif, en référence aux figures annexées, parmi lesquelles :
- la figure 1 illustre un exemple non limitatif de réalisation d'un dispositif pour manipuler des grappes en cire conforme à l'invention,
- les figures 2, 3 et 4 illustrent trois exemples de positionnement du dispositif selon l'invention illustré à la figure 1,
- la figure 5 est une vue de dessous du dispositif conforme à l'invention illustré à la figure 1,
- les figures 6 et 7 illustrent un système de blocage en translation que comporte le dispositif selon l'invention, et
- la figure 8 illustre un exemple de réalisation de la structure d'un dispositif conforme à celui de l'invention.

Dans toutes les figures, les éléments communs portent les mêmes numéros de référence.

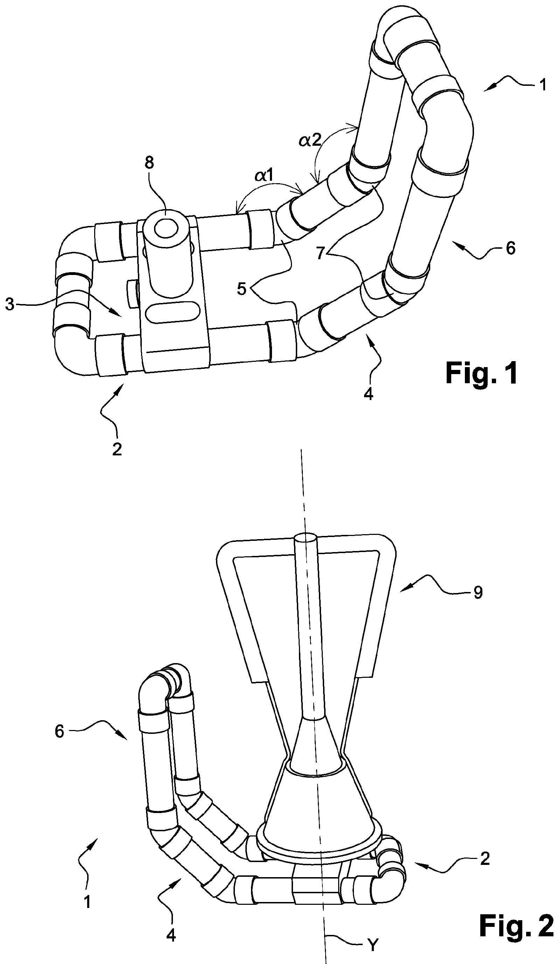

La figure 1 illustre un exemple non limitatif d'une réalisation d'un dispositif 1 pour manipuler des grappes en cire conforme à l'invention. Le dispositif 1 comporte :
- un premier support 2 formant un premier plan, le premier support 2 comportant des moyens de maintien 3 d'une grappe en cire ;
- un deuxième support 4 formant un deuxième plan, le premier support 2 et le deuxième support 4 formant un premier angle déterminé α1 ;
- des premiers moyens de raccordement 5 entre le premier support 2 et le deuxième support 4, les premiers moyens de raccordement 5 présentant un rayon de courbure autorisant le basculement du dispositif 1 sur le premier support 2 ou le deuxième support 4 ;
- un troisième support 6 formant un troisième plan, le deuxième support 4 et le troisième support 6 formant un deuxième angle déterminé α2 ;
- des deuxièmes moyens de raccordement 7 entre le deuxième support 4 et le troisième support 6, les deuxièmes moyens de raccordement 7 présentant un rayon de courbure autorisant le basculement du dispositif 1 sur le deuxième support 4 ou le troisième support 6.

Le premier support 2, le deuxième support 4 et le troisième support 6 sont formés dans cet exemple par des tubes en PVC.

En outre, les premiers moyens de raccordement 5 et les deuxièmes moyens de raccordements 7 sont formés par des coudes tubulaires en PVC. Les rayons des coudes permettent le basculement du dispositif 1 selon trois positions sans heurt et sans difficulté. Ainsi, le dispositif 1 peut être basculé selon trois positions stables :
- une première position selon laquelle le dispositif 1 repose sur le premier support 2 ;
- une deuxième position selon laquelle le dispositif 1 repose sur le deuxième support 4 ;
- une troisième position selon laquelle le dispositif 1 repose sur le troisième support 6.

Lorsque le dispositif 1 est basculé sur les premiers ou deuxièmes moyens de raccordement 5 ou 7, ces derniers constituent des points d'appui et confèrent une stabilité au dispositif 1 tout en facilitant le déplacement du dispositif 1 sur la table puisque seuls des points sont en appui et non des surfaces.

Dans cette réalisation illustrée sur la figure 1, le premier angle déterminé α1 est de 45 degrés et le deuxième angle α2 est de 45 degrés. Il est entendu que les angles peuvent être différents sans pour autant sortir du cadre de l'invention.

Il convient de noter que les moyens de maintien 3 d'une grappe en cire présentent un orifice 8 adapté pour recevoir l'axe de la grappe en cire. Celui-ci sera décrit plus en détail ultérieurement.

Les figures 2, 3 et 4 présentent le dispositif 1 conforme à celui illustré sur la figure 1, le dispositif 1 étant muni d'une grappe en cire 9.

Sur la figure 2, le dispositif 1 repose sur le premier support 2 de sorte que la grappe en cire 9 est positionnée selon une position sensiblement verticale de façon à ce que l'opérateur puisse construire la grappe au moyen de différents éléments en cire et céramique. Il convient également de noter que la grappe 9 peut pivoter sur elle-même selon un axe vertical Y.

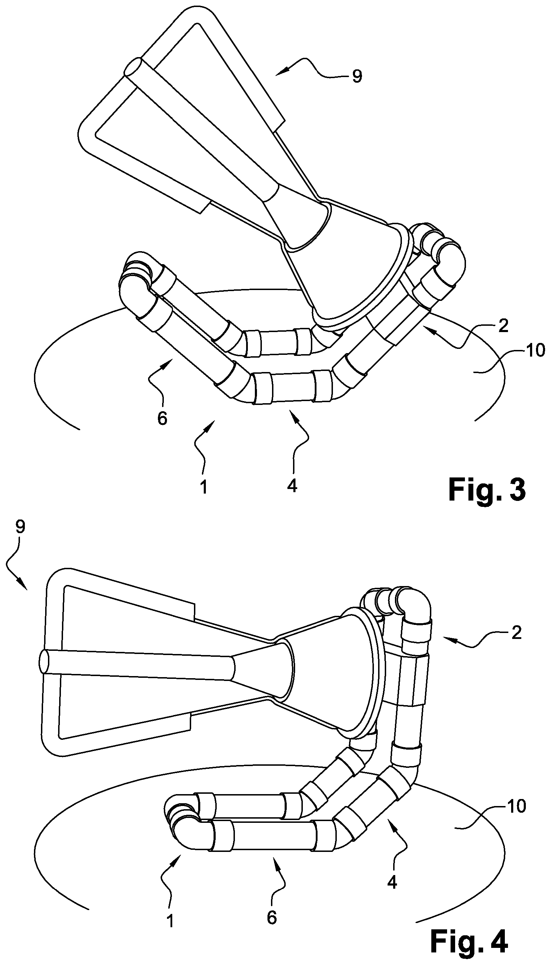

Tel qu'illustré en figure 3, lors de l'assemblage, l'opérateur peut basculer le dispositif 1 sur le deuxième support 4 de sorte que la grappe en cire 9 soit inclinée rapport à la table 10 sur laquelle est disposée le dispositif 1. Dans cette position, la grappe 9 peut aussi pivoter sur elle-même.

Tel qu'illustré en figure 4, l'opérateur peut basculer le dispositif 1 sur le troisième support 6 de sorte que la grappe en cire 9 soit positionnée horizontalement (i.e. sensiblement parallèlement à la table 10). Dans cette position horizontale, la grappe 9 peut également pivoter sur elle-même.

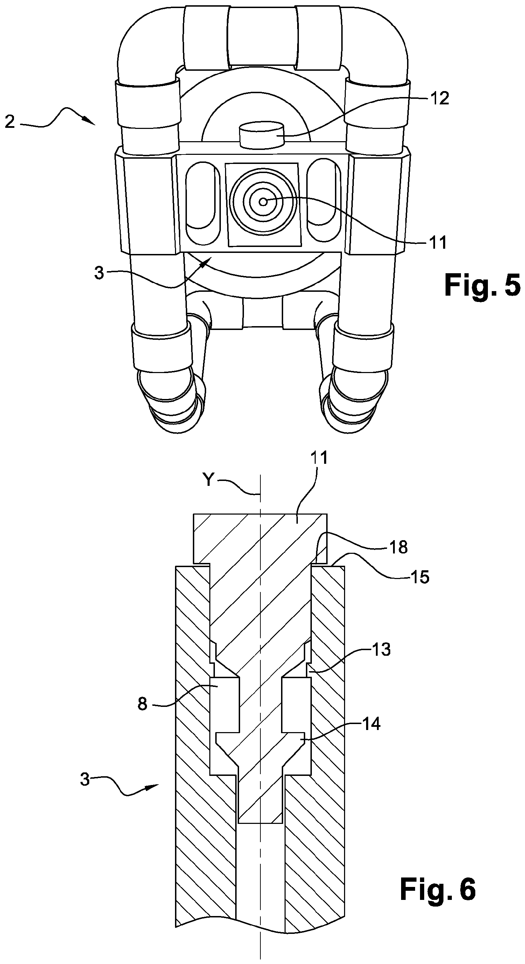

La figure 5 illustre une vue de dessous du premier support 2. Cette figure 2 illustre plus particulièrement les moyens de maintien 3 et l'extrémité de l'axe 11 de la grappe 9 qui est insérée dans l'orifice des moyens de maintien 3. Dans cette réalisation non limitative, le dispositif 1 comporte un système de blocage en rotation 12 du moyen de maintien 3 de la grappe en cire 9. Ce système de blocage 12 est formé par une vis à friction adaptée pour venir en appui sur le moyen de maintien 3 de la grappe en cire 9. Cette vis à friction permet de bloquer et de débloquer le mouvement de rotation du moyen de maintien 3. Le mouvement de rotation de la grappe autour de son axe 11 dans l'orifice 8 du moyen de maintien 3 est encore possible mais il est limité par l'action de frottement de l'axe 11 dans l'orifice 8.

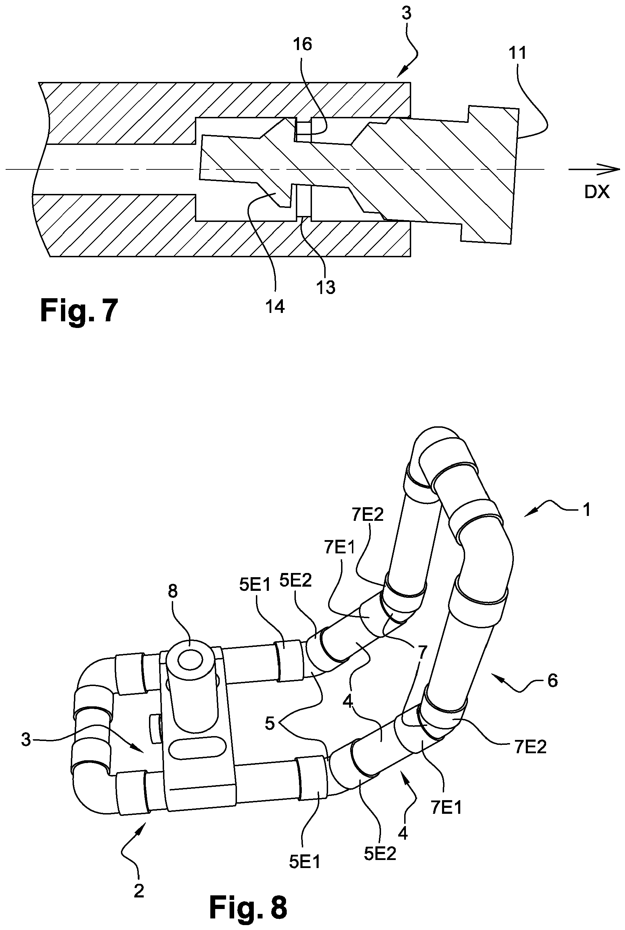

Les figures 6 et 7 illustrent un système de blocage en translation de la grappe en cire par rapport au dispositif selon l'invention. Dans cette réalisation non limitative, le système de blocage en translation 13 est formé par un épaulement faisant saillie dans l'orifice 8. L'épaulement 13 est adapté pour coopérer avec un épaulement externe 14 que comporte l'extrémité de l'axe 11 de la grappe en cire 9.

Plus particulièrement, sur la figure 6, les moyens de maintien 3 sont positionnés verticalement et l'extrémité de l'axe 11 de la grappe en cire 9 est positionnée dans l'orifice 8 des moyens de maintien 3. Dans la position la plus basse, l'épaulement 18 de l'axe 11 est au contact de la surface supérieure 15 des moyens de maintien 3. La grappe peut ainsi être pivotée sur elle-même autour de l'axe Y de l'orifice 8. Dans cette réalisation, aucun système de blocage en rotation n'est illustré. Il est entendu qu'un système de blocage en rotation pourrait être utilisé pour venir bloquer la rotation des moyens de maintiens 3 autour de l'axe Y.

Lorsque le dispositif 1 est positionné sur le deuxième support 4, l'épaulement 18 de l'axe 11 se trouve également au contact de la surface supérieure 15 des moyens de maintien 3 de sorte que la grappe en cire ne peut pas s'échapper.

Lorsque le dispositif 1 est positionné sur le troisième support 6, la grappe en cire est positionnée horizontalement (i.e. parallèlement à la table sur laquelle repose le dispositif 1). Ainsi, le risque que la grappe en cire s'échappe des moyens de maintien 3 est évité grâce à l'épaulement 13 que comporte l'orifice 8. En effet, lorsqu'on tire l'axe 11 selon une direction Dx, c'est-à-dire vers l'extérieur des moyens de maintien 3, l'axe se positionne en porte-à-faux. La surface 16 de l'épaulement 14 de l'axe 11 vient alors au contact de l'épaulement 13 de l'orifice 8. Ce contact empêche l'extraction de l'axe 11, et donc de la grappe en cire.

Pour supprimer ce blocage, il suffit de positionner à nouveau le dispositif 1 sur le premier support 2. Comme dans cette position l'axe 11 n'est plus en porte-à-faux, l'opérateur peut extraire aisément l'axe 11 de l'orifice 8 sans que les moyens de blocage en translation 13 ne l'empêchent.

La figure 8 illustre un exemple de réalisation du premier support 2, du deuxième support 4 et du troisième support 6. Les trois supports sont par exemple en PVC. Selon cette réalisation :
- le premier support 2 présente une structure tubulaire en forme de U,
- le deuxième support 4 est formé par deux tubes,
- le troisième support 6 présente une structure tubulaire en forme de U,
- les premiers moyens de raccordement 5 sont formés par deux coudes tubulaires, chaque coude tubulaire coopérant :
   ▪ à une première extrémité 5E1 avec l'extrémité d'un tube du premier support 2, et
   ▪ à une deuxième extrémité 5E2 avec une première extrémité d'un tube du deuxième support 4,
- les deuxièmes moyens de raccordement 7 sont formés par deux coudes tubulaires, chaque coude tubulaire coopérant :
   ▪ à une première extrémité 7E1 avec la deuxième extrémité d'un tube du deuxième support 4, et
   ▪ à une deuxième extrémité 7E2 avec l'extrémité d'un tube du troisième support 6.

Une telle structure du dispositif 1 selon l'invention constitue un outil ergonomique et peu onéreux à réaliser. La structure tubulaire de l'ensemble ne présente pas de surface agressive et la matière PVC des tubes n'est pas froide pour les manipulations.

De manière générale, un tel dispositif pour manipuler des grappes en cire :
- limite l'apparition de troubles musculo-squelettiques du fait de la diminution des contraintes posturales ;
- est utilisable aussi bien par des droitiers que par des gauchers ;
- est léger, solide et ne requiert aucun entretien particulier.

En outre, le premier support, le deuxième support, le troisième support, les premiers moyens de raccordement et les deuxièmes moyens de raccordement permettent une manipulation aisée et sans effort de la grappe en cire.

Le dispositif pour manipuler des grappes en cire selon l'invention à été décrit avec une structure tubulaire mais il est entendu que les premier, deuxième et troisième supports pourraient être formés par des plaques sans pour autant sortir du cadre de l'invention.

## Revendications

1. Dispositif (1) pour manipuler des grappes en cire (9) comportant :
- un premier support (2) formant un premier plan, ledit premier support (2) comportant des moyens de maintien (3) d'une grappe en cire (9) ;
- un deuxième support (4) formant un deuxième plan, ledit premier support (2) et ledit deuxième support (4) formant un premier angle déterminé (α1) ;
- des premiers moyens de raccordement (5) entre ledit premier support (2) et ledit deuxième support (4),
- un troisième support (6) formant un troisième plan, ledit deuxième support (4) et ledit troisième support (6) formant un deuxième angle déterminé (α2), et
- des deuxièmes moyens de raccordement (7) entre ledit deuxième support (4) et ledit troisième support (6),
dans lequel chacun des trois supports (2, 4, 6) est configuré pour que le dispositif puisse être mis en appui sur un des trois supports (2, 4, 6) et que le moyen de maintien (3) présentent un orifice (8) adapté pour recevoir un axe de la grappe en cire (9).

2. Dispositif (1) selon la revendication 1 précédente, selon lequel :
- les premiers moyens de raccordement (5) présentent un rayon de courbure autorisant le basculement du dispositif (1) sur le premier support (2) ou le deuxième support (4), et
- les deuxièmes moyens de raccordement (7) présentent un rayon de courbure autorisant le basculement du dispositif (1) sur le deuxième support (4) ou le troisième support (6).

3. Dispositif (1) selon l'une des revendications précédentes comportant un système de blocage en translation (13) de la grappe en cire (9).

4. Dispositif (1) selon la revendication précédente **caractérisé en ce que** le système de blocage en translation (13) est formé par un épaulement en saillie dans l'orifice (8) adapté pour coopérer avec un épaulement externe (14) que comporte l'axe (11) de la grappe en cire (9).

5. Dispositif (1) selon l'une des revendications précédentes comportant un système de blocage en rotation (12) du moyen de maintien (3) de la grappe en cire (9).

6. Dispositif (1) selon la revendication précédente selon lequel le système de blocage en rotation (12) est une vis à friction adaptée pour venir en appui sur le moyen de maintien (3) de la grappe en cire (9).

7. Dispositif (1) selon l'une des revendications précédentes selon lequel :
- le premier support (2) présente une structure tubulaire en forme de U,
- le deuxième support (4) est formé par deux tubes,
- le troisième support (6) présente une structure tubulaire en forme de U,
- les premiers moyens de raccordement (5) sont formés par deux coudes tubulaires, chaque coude tubulaire coopérant :
▪ à une première extrémité (5E1) avec l'extrémité d'un tube du premier support (2), et
▪ à une deuxième extrémité (5E2) avec une première extrémité d'un tube du deuxième support (4),
- les deuxièmes moyens de raccordement (7) sont formés par deux coudes tubulaires, chaque coude tubulaire coopérant :
▪ à une première extrémité (7E1) avec une deuxième extrémité d'un tube du deuxième support (4), et
▪ à une deuxième extrémité (7E2) avec l'extrémité d'un tube du troisième support (6).

8. Dispositif (1) selon l'une des revendications précédentes selon lequel le premier angle déterminé (α1) est compris entre 20 et 70 degrés et est préférentiellement de 45 degrés.

9. Dispositif (1) selon l'une des revendications précédentes selon lequel le deuxième angle déterminé (α2) est compris entre 20 et 70 degrés et est préférentiellement de 45 degrés.

## Patentansprüche

1. Vorrichtung (1) zum Handhaben von Bündeln aus Wachs (9), umfassend:
- einen ersten Träger (2), der eine erste Ebene bildet, wobei der genannte erste Träger (2) Haltemittel (3) eines Bündels aus Wachs (9) umfasst;
- einen zweiten Träger (4), der eine zweite Ebene bildet, wobei der genannte erste Träger (2) und der genannte zweite Träger (4) einen ersten bestimmten Winkel (α1) bilden;
- erste Anschlussmittel (5) zwischen dem genannten ersten Träger (2) und dem genannten zweiten Träger (4),
- einen dritten Träger (6), der eine dritte Ebene bildet, wobei der genannte zweite Träger (4) und der genannte dritte Träger (6) einen zweiten bestimmten Winkel (α2) bilden und
- zweite Anschlussmittel (7) zwischen dem genannten zweiten Träger (4) und dem genannten dritten Träger (6),
wobei jeder der drei Träger (2, 4, 6) ausgestaltet ist, damit die Vorrichtung aufstützend auf einem der drei Träger (2, 4, 6) sein kann und das Haltemittel (3) eine Öffnung (8) aufweist, die geeignet ist, um eine Achse des Bündels aus Wachs (9) aufzunehmen.

2. Vorrichtung (1) gemäß dem voranstehenden Anspruch 1, gemäß der:
- die ersten Anschlussmittel (5) einen Krümmungsradius aufweisen, der das Kippen der Vorrichtung (1) auf dem ersten Träger (2) oder dem zweiten Träger (4) zulässt und
- die zweiten Anschlussmittel (7), die einen Krümmungsradius aufweisen, der das Kippen der Vorrichtung (1) auf dem zweiten Träger (4) oder dem dritten Träger (6) zulässt.

3. Vorrichtung (1) gemäß einem der voranstehenden Ansprüche, umfassend ein Verriegelungssystem in Translation (13) des Bündels aus Wachs (9).

4. Vorrichtung (1) gemäß dem voranstehenden Anspruch, **dadurch gekennzeichnet, dass** das Verriegelungssystem in Translation (13) durch einen hervorstehenden Absatz in der Öffnung (8) gebildet ist, der geeignet ist, um mit einem externen Absatz (14) zusammenzuwirken, der die Achse (11) des Bündels aus Wachs (9) umfasst.

5. Vorrichtung (1) gemäß einem der voranstehenden Ansprüche, umfassend ein Verriegelungssystem in Rotation (12) des Haltemittels (3) des Bündels aus Wachs (9).

6. Vorrichtung (1) gemäß dem voranstehenden Anspruch, gemäß dem das Verriegelungssystem in Rotation (12) eine Friktionsschraube ist, die geeignet ist, um auf dem Haltemittel (3) des Bündels aus Wachs (9) zum Aufstützen zu kommen.

7. Vorrichtung (1) gemäß einem der voranstehenden Ansprüche, gemäß der:
- der erste Träger (2) eine röhrenförmige Struktur in U-Form aufweist,
- der zweite Träger (4) von zwei Röhren gebildet ist,
- der dritte Träger (6) eine röhrenförmige Struktur in U-Form aufweist,
- die ersten Anschlussmittel (5) durch zwei röhrenförmige Knie gebildet werden, wobei jedes röhrenförmige Knie zusammenwirkt:
▪ an einem ersten Ende (5E1) mit dem Ende einer Röhre des ersten Trägers (2) und
▪ an einem zweiten Ende (5E2) mit einem ersten Ende einer Röhre des zweiten Trägers (4)
- die zweiten Anschlussmittel (7) durch zwei röhrenförmige Knie gebildet sind, wobei jedes röhrenförmige Knie zusammenwirkt;
▪ an einem ersten Ende (7E1) mit einem zweiten Ende einer Röhre des zweiten Trägers (4) und
▪ an einem zweiten Ende (7E2) mit dem Ende einer Röhre des dritten Trägers (6).

8. Vorrichtung (1) gemäß einem der voranstehenden Ansprüche, gemäß der der erste bestimmte Winkel (α1) zwischen 20 und 70 Grad inbegriffen ist und bevorzugt 45 Grad beträgt.

9. Vorrichtung (1) gemäß einem der voranstehenden Ansprüche, gemäß der der zweite bestimmte Winkel (α2) zwischen 20 und 70 Grad inbegriffen ist und bevorzugt 45 Grad beträgt.

## Claims

1. Device (1) for handling wax spider-like sprues (9) comprising:
- a first support (2) forming a first plane, said first support (2) comprising means (3) of supporting a wax spider-like sprue (9);
- a second support (4) forming a second plane, said first support (2) and said second support (4) forming a first determined angle α1;
- first connection means (5) between said first support (2) and said second support (4);
- a third support (6) forming a third plane, said second support (4), and said third support (6) forming a second determined angle α2, and
- second connection means (7) between said second support (4) and said third support (6)
wherein each of the three supports (2, 4, 6) is configurated so that the device can be supported on one of the three supports (2, 4, 6) and that the retaining means (3) include an orifice (8) into which the hinge pin (11) of the wax spider-like sprue (9) can fit.

2. Device (1) according to the previous claim 1, in which:
- the first connection means (5) have a radius of curvature such that the device (1) can tilt on the first support (2) or on the second support (4), and
- the second connection means (7) have a radius of curvature such that the device (1) can tilt on the second support (4) or on the third support (6).

3. Device (1) according to one of the previous claims, comprising a system (13) for blocking the wax spider-like sprue (9) in translation.

4. Device (1) according to the previous claim, **characterised in that** the translation blocking system (13) consists of a projecting shoulder in the orifice (8) adapted to cooperate with an external shoulder (14) formed on the hinge pin (11) of the wax spider-like sprue (9).

5. Device (1) according to one of the previous claims, comprising a system (12) for blocking rotation of the retaining means (3) of the wax spider-like sprue (9) .

6. Device (1) according to the previous claim, in which the rotation blocking system (12) is a friction screw adapted to bear on the retaining means (3) of the wax spider-like sprue (9).

7. Device (1) according to one of the previous claims, in which:
- the first support (2) has a U-shaped tubular structure,
- the second support (4) is formed from two tubes,
- the third support (6) has a U-shaped tubular structure,
- the first connection means (5) are formed from two tubular bends, each tubular bend cooperating:
▪ at a first end (5E1) with the end of a tube of the first support (2), and
▪ at a second end (5E2) with a first end of a tube of the second support (4);
- the second connection means (7) are formed from two tubular bends, each tubular bend cooperating:
▪ at a first end (7E1), with a second end of a tube of the second support (4), and
▪ at a second end (7E2), with the end of a tube of the third support (6).

8. Device (1) according to one of the previous claims, in which the first determined angle (α(1) is between 20 and 70 degrees and is preferably 45 degrees.

9. Device (1) according to one of the previous claims, in which the second determined angle (α2) is between 20 and 70 degrees and is preferably 45 degrees.
